# FASCICULE DE BREVET EUROPEEN

(11) **EP 2 134 975 B1**
(45) Date de publication et mention de la délivrance du brevet: **22.12.2010**
(21) Numéro de dépôt: 08788099.3
(22) Date de dépôt: 02.04.2008
(51) Int. Cl.: F16B 5/02, B60R 13/02, B62D 25/04, B62D 65/14

(54) **ELEMENT DEFINISSANT UN TROU DE VISSAGE TRAVERSANT**
ELEMENT ZUR DEFINITION EINES SCHRAUBVORGANGS DURCH EIN LOCH
MEMBER DEFINING A SCREWING THROUGH HOLE

(30) Priorité: 16.04.2007 FR 0754483
(43) Date de publication de la demande: 23.12.2009
(73) Titulaire: Renault SAS, 92100 Boulogne Billancourt (FR)
(72) Inventeur: QUEVILLY, Eric, F-78370 Plaisir (FR)
(86) Numéro de dépôt international: PCT/FR2008/050573
(87) Numéro de publication internationale: WO 2008/139083

(56) Documents cités:
- EP-A- 0 474 397
- DE-A1- 3 820 760
- DE-A1- 4 414 765
- DE-A1- 19 642 914
- US-A- 3 172 603

## Description

La présente invention a pour objet un élément définissant un trou de vissage traversant. L'invention concerne plus particulièrement un trou de vissage comprenant une première extrémité pourvue d'une surface de lamage correspondante coaxiale audit trou et une deuxième extrémité débouchante, ledit trou étant apte à recevoir une vis.

On connaît déjà un trou de vissage classique tel que décrit précédemment et destiné à permettre la fixation d'une pièce sur un support. Cependant, lorsque le trou n'est pas visible ou n'est pas facilement accessible et plus particulièrement lorsqu'il est en retrait par rapport à la surface extérieure d'un support, il est difficile pour l'opérateur de placer rapidement la vis dans le trou de vissage et de procéder au vissage. En effet, l'opérateur manipulant la vis peut entrer en contact plusieurs fois avec le lamage avant de repérer le trou et d'engager la vis. Ce qui induit une perte de temps non négligeable sur une chaîne de montage, par exemple. Par ailleurs, un autre inconvénient non négligeable dans le cas où le trou de vissage est en retrait est le fait que la pièce devient indémontable une fois fixée à une structure.

Le document US 3172603 est considéré comme l'état de la technique le plus proche.

L'invention vise à pallier les inconvénients en proposant un support définissant un trou de vissage amélioré.

A cet effet, un premier objet de l'invention est de fournir un élément définissant un trou de vissage traversant apte à recevoir une vis comprenant une première extrémité pourvue d'une surface de lamage correspondante coaxiale audit trou et d'une deuxième extrémité débouchante **caractérisé en ce que** ladite surface de lamage comprend une entaille dans le sens d'introduction de la vis, ladite entaille présentant une pente inclinée définie telle que la pente est montante à partir de la première extrémité du trou de vissage de manière à constituer un guidage lors du positionnement de la vis dans ledit trou.

Un des avantages de la présente invention est que l'opérateur peut positionner la vis à l'aveugle et donc être plus rapide lors du montage de la pièce sur un support.

Selon un premier mode de réalisation de l'invention, l'entaille peut présenter une largeur transversale constante dans le sens d'introduction de la vis.

Selon un second mode de réalisation, l'entaille peut présenter une largeur transversale qui se rétrécie dans le sens d'introduction de la vis.

Selon d'autres caractéristiques de l'invention :
- l'entaille peut posséder une longueur sensiblement identique à celle du trou,
- l'entaille peut être fermée au niveau de la deuxième extrémité du trou,
- l'élément peut être une garniture de pied milieu d'un véhicule automobile.

L'invention concerne également l'utilisation d'un tel élément comprenant un trou de vissage pour faciliter le montage dudit élément sur une structure de caisse de véhicule automobile.

On va maintenant décrire un exemple de mise en oeuvre de l'invention dans ses divers aspects et variantes, en référence aux dessins annexés, où les mêmes références numériques désignent des éléments fonctionnellement semblables :

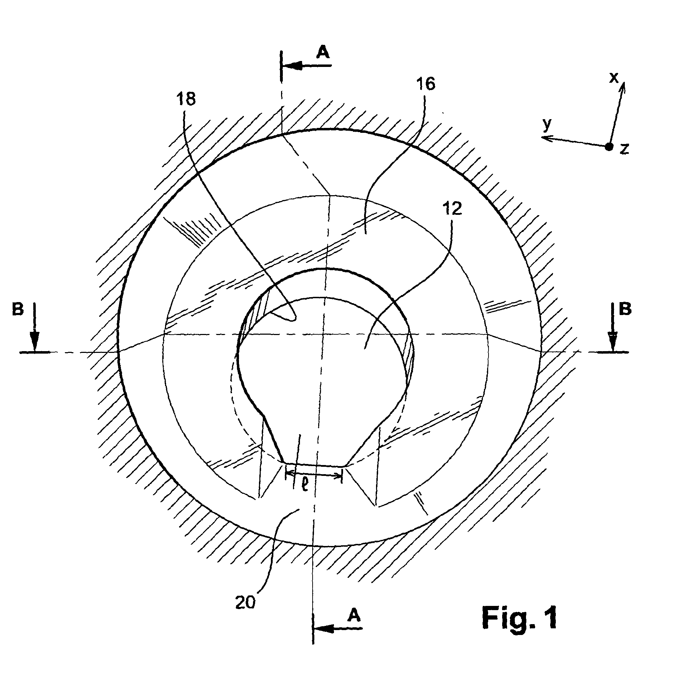

- la figure 1 est une vue en perspective du trou de vissage selon le premier mode de réalisation de l'invention,

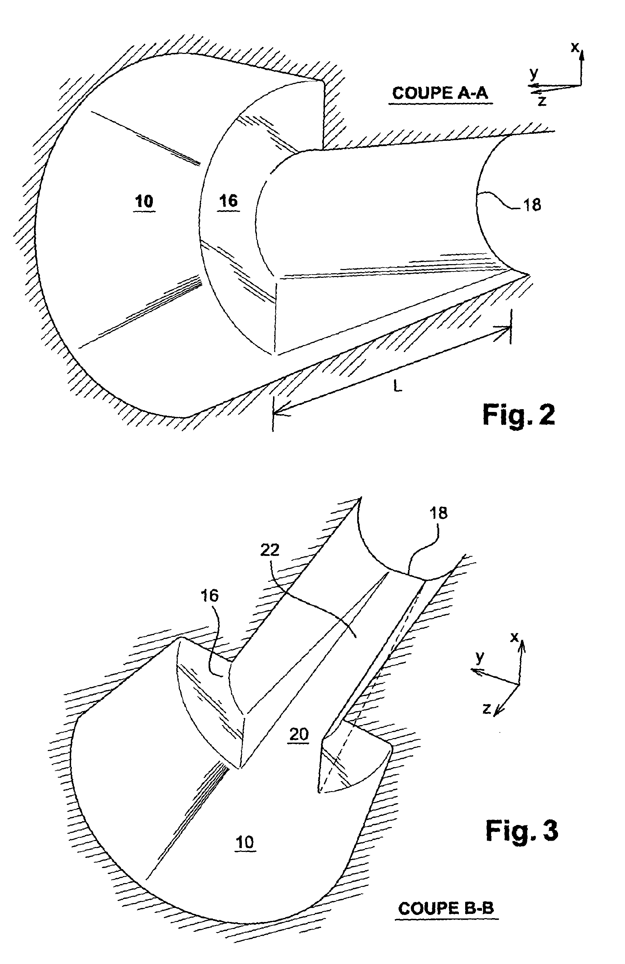

- la figure 2 est une vue en perspective de la coupe A-A telle que définie dans la figure 1 selon le premier de réalisation de l'invention,
- la figure 3 est une vue en perspective de la coupe B-B telle que définie dans la figure 1 selon le premier de réalisation de l'invention,
- la figure 4 est une vue en perspective du trou de vissage selon le second mode de réalisation de l'invention,
- la figure 5 est une vue en perspective de la coupe A-A telle que définie dans la figure 4 selon le second de réalisation de l'invention, et
- la figure 6 est une vue en perspective de la coupe B-B telle que définie dans la figure 4 selon le second de réalisation de l'invention.

Dans la description qui va suivre, on adoptera à titre non limitatif une orientation longitudinale, verticale et transversale selon l'orientation traditionnellement utilisée dans l'automobile et indiquée par le trièdre X, Y, Z.

En références aux figures, il est représenté une pièce ou un élément 10 définissant un trou 12 de vissage apte à recevoir une vis (non représentée) pour solidariser ledit élément 10 sur un support 14. Dans le domaine automobile, la pièce peut être, par exemple, une garniture de pied milieu à fixer sur la caisse d'un véhicule qui fait office de support 14. La garniture est réalisée dans un matériau plastique. Le trou 12 de vissage se trouve tel qu'illustré sur les figures de manière non limitative en retrait par rapport à une surface extérieure de la pièce.

Le trou de vissage selon l'invention est traversant et comprend au niveau de sa première extrémité une surface 16 de lamage correspondante coaxiale audit trou 12. La seconde extrémité 18 étant débouchante et destinée à être en contact avec le support pour pouvoir solidariser la pièce 10 et le support 14 par l'intermédiaire d'une vis.

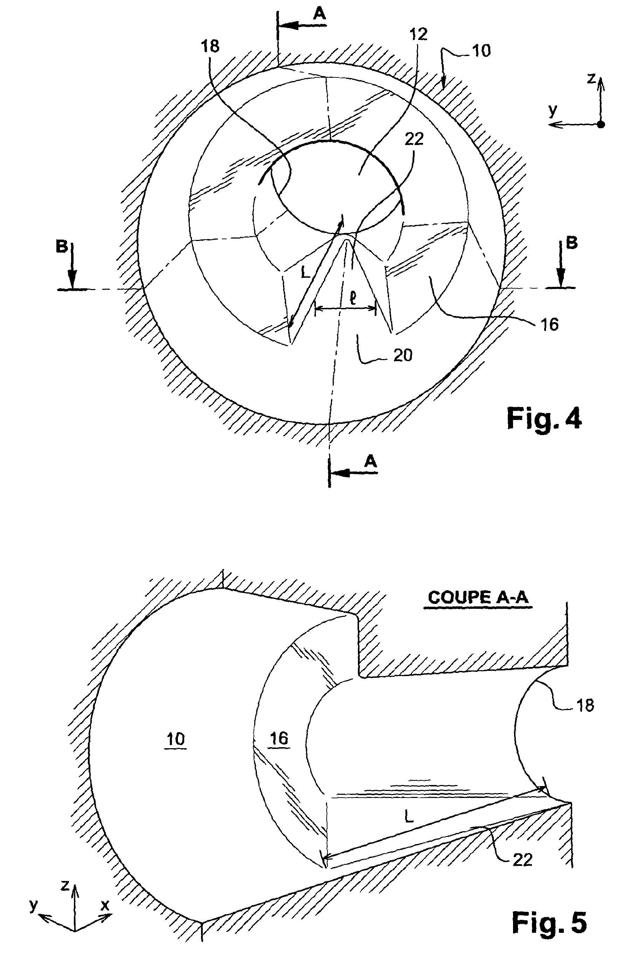

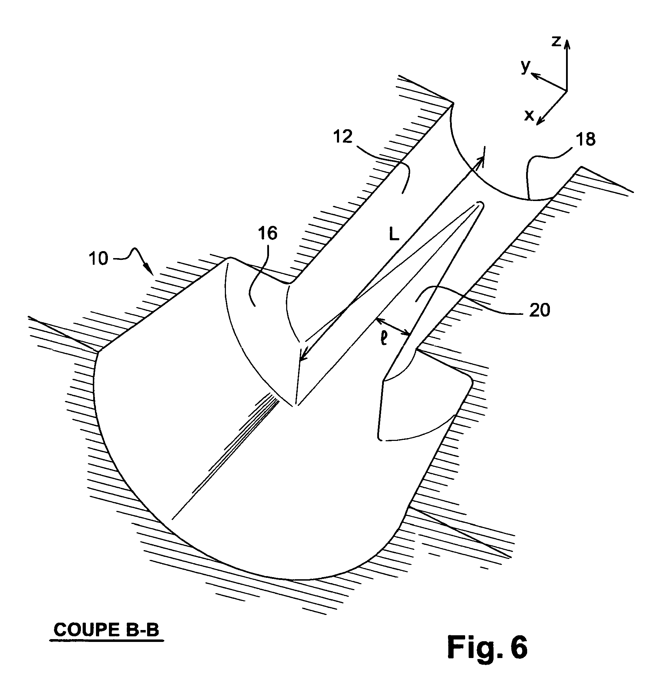

La surface 16 de lamage comprend une entaille 20 qui s'étend sur tout ou partie de la longueur L du trou 12 et de préférence sur toute la longueur. Selon le premier mode de réalisation, l'entaille s'étend sur toute la longueur L du trou et possède une largeur I sensiblement constante sur cette longueur. Selon le second mode de réalisation, l'entaille s'étend sur toute la longueur du trou et possède une largeur I décroissant à partir de sa première extrémité 16 et jusqu'à la seconde extrémité 18. De préférence et tel qu'illustré sur les figures 4 et 6, la largeur de l'entaille est fermée au niveau de la seconde extrémité 18. Ce mode de réalisation permet l'utilisation de vis en matériaux tendres avec bout auto taraudant ou pointu.

Selon l'un quelconque des modes de réalisation, la largeur de l'entaille peut être sensiblement identique à la largeur d'une vis en entrée de l'extrémité 16. Cependant, plus la largeur sera importante plus l'insertion de la vis sera aisée. Par ailleurs, la profondeur de l'entaille peut être sensiblement identique à la hauteur du lamage qui est en fait, la dimension radiale de la surface de lamage. l'entaille 20 présente une pente 22 inclinée définie telle que la pente est montante à partir de sa première extrémité 16 du trou 12 de vissage de manière à constituer un guidage lors du positionnement de la vis dans ledit trou. En effet, un opérateur souhaitant insérer une vis dans le trou 12 appliquera la tige de la vis, qui à titre indicatif peut être filetée ou de tout autre type, contre la pente et la fera glisser vers le trou 12. La pente servant ainsi de rampe de guidage. L'insertion de la vis dans le trou est ainsi beaucoup plus rapide avec cette rampe de guidage et permet de gagner du temps lors du montage de l'élément 10 sur le support 14.

## Revendications

1. Elément (10) définissant un trou de vissage (12) traversant apte à recevoir une vis comprenant une première extrémité pourvue d'une surface de lamage (16) correspondante coaxiale audit trou et d'une deuxième extrémité (18) débouchante **caractérisé en ce que** ladite surface de lamage (16) comprend une entaille (20) dans le sens d'introduction de la vis, ladite entaille présentant une pente inclinée (22) définie telle que la pente est montante à partir de la première extrémité (16) du trou de vissage de manière à constituer un guidage lors du positionnement de la vis dans ledit trou (12).

2. Elément selon l'une des revendications précédentes, **caractérisé en ce que** l'entaille (20) présente une largeur transversale (I) constante dans le sens d'introduction de la vis.

3. Elément selon la revendication 1, **caractérisé en ce que** l'entaille présente une largeur transversale (I) qui se rétrécie dans le sens d'introduction de la vis.

4. Elément selon l'une des revendications précédentes, **caractérisé en ce que** l'entaille possède une longueur (L) sensiblement identique à celle du trou (12).

5. Elément selon l'une des revendications précédentes, **caractérisé en ce que** l'entaille (20) est fermée au niveau de la deuxième extrémité (18) du trou.

6. Elément selon l'une des revendications précédentes, **caractérisé en ce qu'**il s'agit d'une garniture de pied milieu d'un véhicule automobile.

7. Utilisation d'un élément comprenant un trou de vissage selon l'une des revendications précédentes pour faciliter le montage dudit élément (10) sur une structure de caisse de véhicule automobile (14).

## Claims

1. Element (10) defining a screw through-hole (12) able to accommodate a screw and comprising a first end, which has a corresponding counterbore surface (16) coaxial with said hole, and a second open end (18), **characterized in that** said counterbore surface (16) comprises a notch (20) in the screw introduction direction, said notch having an inclined slope (22) defined such that the slope rises from the first end (16) of the screw hole so as to provide guidance as the screw is positioned in said hole (12).

2. Element as claimed in Claim 1, **characterized in that** the notch (20) has a transverse width (l) which is constant in the screw introduction direction.

3. Element as claimed in Claim 1, **characterized in that** the notch has a transverse width (l) which narrows in the screw introduction direction.

4. Element as claimed in one of the preceding claims, **characterized in that** the notch has a length (L) substantially identical to that of the hole (12).

5. Element as claimed in one of the preceding claims, **characterized in that** the notch (20) closes up at the second end (18) of the hole.

6. Element as claimed in one of the preceding claims, **characterized in that** it is a center pillar trim piece for a motor vehicle.

7. Use of an element comprising a screw hole as claimed in one of the preceding claims for aiding the mounting of said element (10) on a motor vehicle body structure (14).

## Patentansprüche

1. Element (10), das ein Durchgangsverschraubungsloch (12) definiert, das geeignet ist, eine Schraube aufzunehmen und ein erstes Ende, das mit einer entsprechenden, zum Loch koaxialen Anschnittfläche (16) versehen ist, und ein zweites Mündungsende (18) umfasst, **dadurch gekennzeichnet, dass** die Anschnittfläche (16) eine Einkerbung (20) in der Einführrichtung der Schraube umfasst, die eine Auflaufschräge (22) aufweist, die so definiert ist, dass die Schräge ab dem ersten Ende (16) des Verschraubungslochs so ansteigt, dass sie bei der Positionierung der Schraube im Loch (12) eine Führung darstellt.

2. Element nach Anspruch 1, **dadurch gekennzeichnet, dass** die Einkerbung (20) eine Querbreite (l) hat, die in der Einführrichtung der Schraube konstant ist.

3. Element nach Anspruch 1, **dadurch gekennzeichnet, dass** die Einkerbung (20) eine Querbreite (l) hat, die sich in der Einführrichtung der Schraube verengt.

4. Element nach einem der vorhergehenden Ansprüche, **dadurch gekennzeichnet, dass** die Einkerbung eine Länge (L) hat, die mit der des Lochs (12) im Wesentlichen identisch ist.

5. Element nach einem der vorhergehenden Ansprüche, **dadurch gekennzeichnet, dass** die Einkerbung (20) am zweiten Ende (18) des Lochs geschlossen ist.

6. Element nach einem der vorhergehenden Ansprüche, **dadurch gekennzeichnet, dass** es sich um eine Mittelsäulenverkleidung eines Kraftfahrzeugs handelt.

7. Verwendung eines Elements mit einem Verschraubungsloch nach einem der vorhergehenden Ansprüche zur leichteren Montage des Elements (10) an einer Kraftfahrzeugkarosseriestruktur (14).
